# FASCICULE DE BREVET EUROPEEN

(11) **EP 1 049 281 B1**
(45) Date de publication et mention de la délivrance du brevet: **01.12.2004**
(21) Numéro de dépôt: 99440078.6
(22) Date de dépôt: 19.04.1999
(51) Int. Cl.: H04J 3/07

(54) **Système TDMA multipoint à point utilisant une structure de burst particulière et émetteur correspondant**
TDMA-Mehrpunkt-zu-Punkt-System unter Verwendung einer besonderen Burststruktur und dazugehöriger Sender
TDMA multipoint-to-point system using a specific burst structure and corresponding transmitter

(43) Date de publication de la demande: 02.11.2000
(73) Titulaire: ALCATEL, 75008 Paris (FR)
(72) Inventeur: Bousquet, Jacques, 78290 Croissy sur Seine (FR); Durnez, François, 75014 Paris (FR); Gerrier, Christophe, 92300 Levallois-Perret (FR)
(74) Mandataire: Scheer, Luc

(56) Documents cités:
- EP-A- 0 903 872
- WO-A-96/27959
- FR-A- 2 700 086

## Description

Le domaine de l'invention est celui de la radiocommunication. Plus précisément la présente invention concerne un système de transmission TDMA multipoint à point utilisant une structure de burst particulière permettant de transmettre au sein du même système de transmission des informations de différents types, par exemple de la parole et des données.

Dans un système à accès multiple à répartition dans le temps (TDMA), chaque utilisateur utilise une fréquence donnée pendant un intervalle de temps donné, les autres intervalles de temps étant réservés à d'autres utilisateurs. Le signal transmis par un utilisateur dans l'intervalle de temps qui lui est attribué est dénommé burst.

Dans la suite de cette description on considère que chaque burst transmis comporte :
- un temps de garde situé en début, en fin, ou en début et en fin de burst et ne contenant pas de signal ;
- des symboles d'information obtenus par modulation du signal émis

On nommera dans la suite de cette description :
- burst unitaire, le signal transmis dans le plus petit intervalle de temps attribué à un utilisateur, qualifié d'intervalle de temps unitaire.
- superburst, un burst de longueur multiple de celle du burst unitaire attribué à un utilisateur unique, correspondant à plusieurs bursts unitaires consécutifs, dits bursts adjacents.

Dans le cas de transmission de parole, service caractérisé par un débit régulier identique pour chaque utilisateur, chaque utilisateur se voit allouer, de façon régulière, un intervalle de temps unitaire. La durée de l'intervalle de temps est une constante du système de transmission adaptée aux caractéristiques du service en matière de débit, de délai ou encore d'exigence vis à vis du taux d'erreur. Lorsque différents types de services ayant chacun ses caractéristiques propres doivent être supportés simultanément par le même système de transmission, des adaptations sont nécessaires. La transmission d'informations de types différents tels que de la voix et des données est classiquement réalisée en attribuant à chaque utilisateur un nombre d'intervalles de temps unitaires dépendant de ses besoins.

On peut aller plus loin, afin de gagner en débit, comme décrit dans le brevet US - 5,566,172. Ce document expose une méthode où plusieurs intervalles de temps unitaires consécutifs sont regroupés et attribués à un seul utilisateur qui pourra émettre, dans cet intervalle de temps, un superburst. Ce regroupement permet de remplacer des séquences redondantes, comme entre autre les temps de garde situés entre deux séquences de symboles d'information du superburst, par des symboles d'information. Ceci permet de réduire la redondance à l'intérieur du superburst et d'optimiser la quantité d'information transmise dans le superburst.

Dans le cas où la chaîne de communication contient une entité réalisant une amplification du signal reçu avant de le réémettre, par exemple un satellite, les caractéristiques propres de l'amplificateur de cette entité entraînent des perturbations lors de transitions brutales de l'amplitude du signal. Ces transitions sont observées à chaque fois qu'un temps de garde, dépourvu de signal et présentant donc une amplitude de signal négligeable, entrecoupe le flux d'information présentant une amplitude de signal non négligeable. Les perturbations proviennent du fait que l'amplificateur introduit une modification de la phase du signal en sortie fonction de l'amplitude du signal en entrée. Lors d'une variation brutale de l'amplitude du signal en entrée de l'amplificateur, le signal amplifié en sortie de l'amplificateur présentera une variation de phase importante.

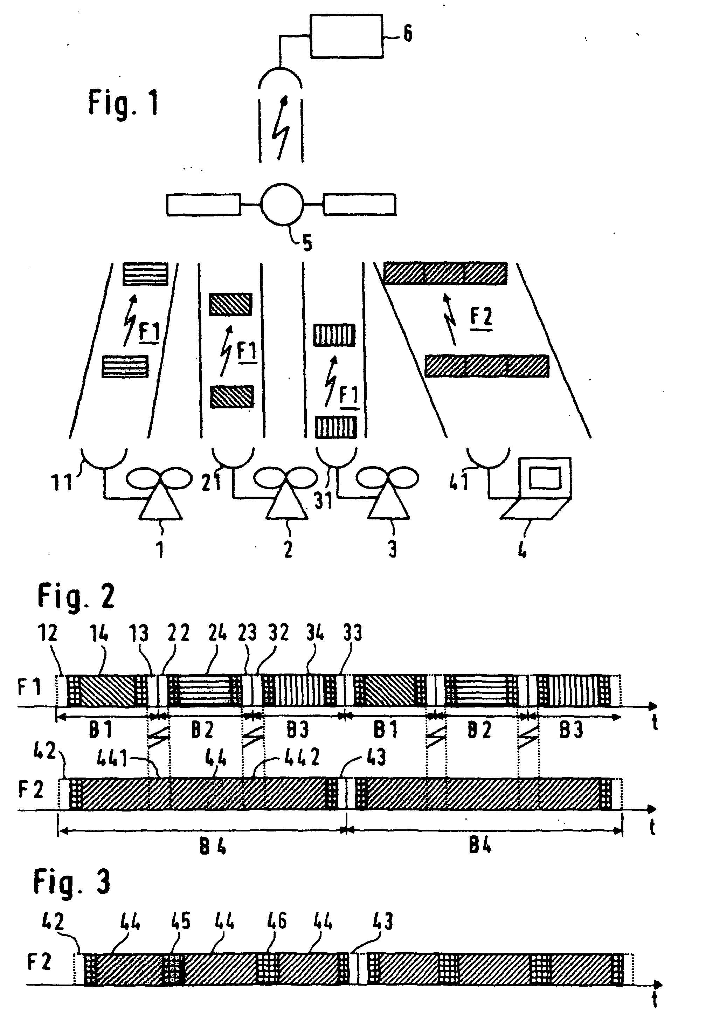

Un exemple illustrant le problème décrit ci-dessus est donné au travers de la figure 1.

Quatre émetteurs 1, 2, 3 et 4, chacun relié respectivement à une antenne émettrice 11, 21, 31 et 41 communiquent au travers de canaux de communication avec une station de base 6 par l'intermédiaire d'un satellite 5. Les émetteurs 1, 2 et 3 sont de même type et permettent la transmission d'informations de type parole. Ces trois émetteurs émettent sur la même fréquence porteuse F1, à tour de rôle, durant des intervalles de temps unitaires. Dans chaque triplet d'intervalles de temps consécutifs, l'émetteur 1 se voit attribuer le premier intervalle de temps, l'émetteur 2 le second intervalle de temps et l'émetteur 3 le troisième intervalle de temps. L'émetteur 4 permet la transmission d'informations de type données. Il émet sur une fréquence porteuse F2, différente de F1. L'émetteur 4 est le seul à émettre sur la fréquence F2, il émet une suite de superbursts consécutifs s'étendant sur un intervalle de temps trois fois plus long que l'intervalle de temps unitaire. Il offre ainsi un débit de transmission trois fois plus important que les émetteurs d'informations de type parole 1, 2 et 3.

L'amplificateur situé directement après l'antenne de réception du satellite 5 amplifie simultanément le signal contenu dans les bursts émis par différents émetteurs sur des porteuses différentes, ces bursts arrivant de manière synchrone au niveau de l'amplificateur. Lorsque tous les bursts sont de même longueur, les temps de garde coïncident exactement, les perturbations n'ont pas d'influences néfastes. Quand, au contraire, coexistent bursts et superbursts comme dans l'exemple exposé dans la figure 1, il apparaît des instants où le temps de garde d'un burst reçu sur une fréquence donnée correspond à un ou plusieurs symboles d'information dans un superburst reçu sur une autre fréquence.

La figure 2 représente l'étalement en temps et en fréquence de l'information reçue au niveau du satellite 5 dans le cas du système de transmission décrit dans la figure 1. Plus précisément la figure 2 représente une succession de bursts reçus en parallèle sur les fréquences F1 et F2 et reportés sur deux axes ayant la même origine temporelle. Les bursts B1, B2 et B3 reçus sur la fréquence porteuse F1 sont des burst unitaires juxtaposés provenant respectivement des émetteurs 1, 2 et 3. Les bursts B4 reçus sur la fréquence porteuse F2 sont des superbursts de longueur triple de la longueur du burst unitaire provenant de l'émetteur 4.

Un temps de garde est prévu en début et en fin de chaque burst émis, qu'il s'agisse d'un burst unitaire ou d'un superburst. Les temps de garde 12, 22, 32 et 42 sont les temps de garde de début de burst émis respectivement par les émetteurs 1, 2, 3 et 4. Les temps de garde 13, 23, 33 et 43 sont les temps de garde de fin de burst émis respectivement par les émetteurs 1, 2, 3 et 4.

Une séquence d'apprentissage est prévue dans chaque burst directement après le temps de garde de début et directement avant le temps de garde de fin. Ces séquences d'apprentissage sont représentées mais non référencées sur la figure 2.

Les bursts B1, B2, B3 et B4 comportent également chacun des symboles d'information respectivement 14, 24, 34 et 44 correspondant à l'information utile transmise par l'utilisateur à qui est attribué le burst.

Le temps de garde du début de burst 12 émis par l'émetteur 1 est reçu en même temps que le temps de garde du début de burst 42 émis par l'émetteur 4.

Le temps de garde de fin de burst 13 émis par l'émetteur 1 et le temps de garde de début de burst 22 émis par l'émetteur 2 sont adjacents et reçus en même temps que des symboles d'information 441 du burst émis par l'émetteur 4.

Le temps de garde de fin de burst 23 émis par l'émetteur 2 et le temps de garde de début de burst 32 émis par l'émetteur 3 sont adjacents et reçus en même temps que des symboles d'information 442 du burst émis par l'émetteur 4.

Le temps de garde de fin de burst 33 émis par l'émetteur 3 est reçu en même temps que le temps de garde de fin de burst 43 émis par l'émetteur 4.

Les perturbations lors de la réception de temps de garde au niveau de l'amplificateur du satellite 5 entraînent des modifications de la phase du signal transporté dans le superburst aux emplacements correspondants 42, 441, 442 et 43. Les emplacements 42 et 43 étant des temps de garde, les perturbations restent à ces endroits sans effet néfaste. Les emplacements référencés 441 et 442 contenant des symboles d'information sont, par contre, sensibles aux perturbations qui entraînent un problème au niveau de la démodulation du signal. En effet, comme la phase des symboles d'information contenus dans chaque burst est estimée et utilisée pour la démodulation du signal, une telle modification de phase est source de nombreuses erreurs de démodulation au niveau des symboles d'informations situés aux emplacements 441 et 442.

Sachant que les superbursts sont utilisés pour des services de données qui imposent en général des exigences plus strictes en matière de taux d'erreur qu'un service de phonie, l'objectif de la présente invention est de définir une structure de superburst telle que l'on affranchisse les symboles d'information du superburst de l'influence néfaste des non-linéarités de l'amplificateur, tout en optimisant la quantité d'information transportée dans le superburst.

Ces objectifs, ainsi que d'autres qui apparaîtront dans la suite, sont atteints en insérant des séquences de remplissage aux emplacements des superbursts non occupés par un temps de garde et susceptibles de correspondre à un emplacement occupé par un temps de garde dans un burst reçu simultanément sur une fréquence porteuse différente.

Les non-linéarités induites par un temps de garde présent sur un certaine fréquence porteuse ne perturberont donc pas de symboles d'information puisque les symboles d'information ne coïncident jamais avec des temps de garde reçus au même instant sur une autre porteuse. On limite donc le taux d'erreur provoqué par les interférences dues aux non-linéarités de l'amplificateur.

Dans un mode de réalisation préférentiel, chaque séquence de remplissage insérée dans un superburst est choisie plus longue que le temps de garde qu'elle est appelée à recouvrir. On peut préférentiellement la choisir de longueur égale à la longueur du temps de garde à recouvrir augmentée de deux fois l'incertitude de synchronisation absolue, la séquence étant centrée par rapport au milieu du temps de garde correspondant.

Avantageusement, la séquence de remplissage peut être une séquence d'apprentissage permettant, outre la résolution du problème cité précédemment de permettre au récepteur de disposer régulièrement de séquences d'apprentissage. L'introduction de séquences d'apprentissage supplémentaires dans un superburst présente l'avantage de pouvoir suivre plus précisément la dérive en fréquence du signal reçu au niveau du récepteur afin d'assurer une démodulation de bonne qualité.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- la figure 1 représente un système de communication composé d'émetteurs de types différents et d'un satellite permettant de relayer l'information reçue vers une station de base,
- la figure 2 représente la structure temporelle de l'information reçue au niveau du satellite sur les différentes fréquences porteuses utilisées par les émetteurs,
- la figure 3 représente la structure d'un superburst obtenue selon l'invention,
- la figure 4 représente la structure préférentielle d'un superburst obtenue selon l'invention en tenant compte de l'incertitude absolue de synchronisation.

On va maintenant décrire un exemple de mise en oeuvre de l'invention en référence à la figure 1 représentant un système de communication comprenant quatre émetteurs émettant des bursts d'information en direction d'un satellite selon une technique d'accès au médium de type TDMA décrite précédemment. La structure de superburst découlant de l'invention est illustrée dans la figure 3. Les figures 2 et 3 sont corrélatives, les axes représentés ont même origine temporelle. Aux emplacements 441 et 442 du superburst définis précédemment à l'aide de la figure 2, on introduit respectivement des séquences d'apprentissage 45 et 46 couvrant exactement l'emplacement correspondant sur la fréquence porteuse F1 aux temps de garde 13, 22, 23 et 32. Ces temps de garde ont la particularité de correspondre à des emplacements différents des extrémités du superburst.

A la lumière de la figure 3, on peut extrapoler, pour tout superburst de longueur multiple quelconque de la longueur du burst unitaire, la position des emplacements où les insertions de séquences d'apprentissage sont nécessaires pour répondre à l'objectif de l'invention.

Les séquences d'apprentissage insérées peuvent être de forme quelconque, reprenant la forme des séquences d'apprentissage de début et de fin de burst ou non. Dans un burst unitaire, les séquences d'apprentissage doivent permettre au récepteur de retrouver la phase d'émission afin de permettre une démodulation de qualité en tenant compte des éventuelles dérives en fréquence provoquées par les instabilités des éléments physique de transmission et de réception notamment dues aux fréquences porteuses très élevées. Dans le cas d'un superburst, il est avantageux de disposer de séquence d'apprentissage à espaces aussi réguliers que celui entre la séquence d'apprentissage de début et celle de fin d'un burst unitaire. Ceci permet de suivre aussi précisément la dérive en fréquence du signal quelque soit la longueur du burst. Si cette dérive en fréquence était évaluée en ne tenant compte que des séquences d'apprentissage en début et en fin de burst la précision ne serait pas assez importante et entraînerait des erreurs de démodulation. En disposant de séquences d'apprentissage plus nombreuses on peut éviter certaines erreurs de démodulation et ainsi oeuvrer en direction d'un taux d'erreur peu élevé dans les superbursts dont la nécessité a été exposée précédemment.

Dans un mode de réalisation préférentiel on peut étendre l'invention en tenant compte d'incertitudes de synchronisation. En effet, bien que les émetteurs soient synchronisés, il peut persister une incertitude sur l'instant précis d'arrivée des informations émises par un émetteur au niveau du récepteur. Cette incertitude peut entraîner le chevauchement de deux bursts émis par des émetteurs distincts sur la même porteuse et censés arriver dans des intervalles de temps adjacents au niveau du récepteur, en admettant que le premier burst arrive par exemple plus tard que prévu et le suivant plus tôt. Ceci est évité grâce aux temps de garde dimensionnés de telle sorte qu'ils garantissent le non chevauchement des bursts en tenant compte de l'incertitude de synchronisation. On définit l'incertitude absolue de synchronisation par la durée de la période durant laquelle le début du signal contenu dans un burst soumis à une incertitude de synchronisation est susceptible d'être reçu par le récepteur. L'incertitude absolue de synchronisation s'étend également de part et d'autre de l'instant où le début du burst devrait être reçu dans le cas idéal d'absence d'incertitude de synchronisation.

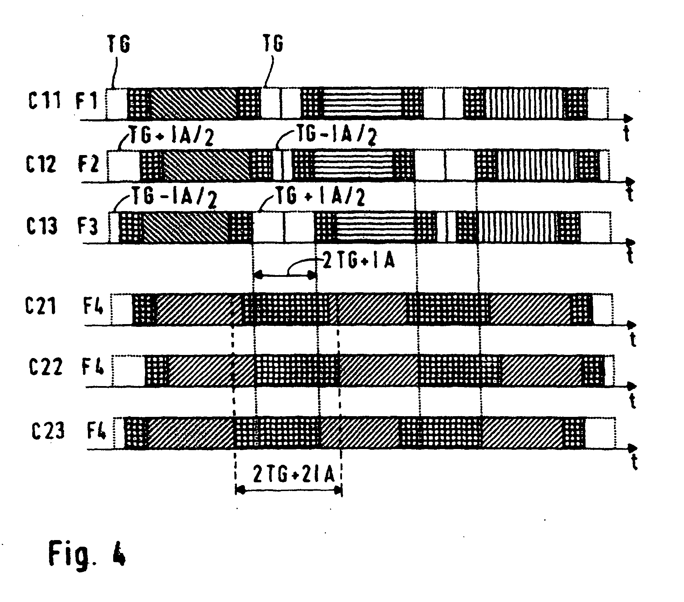

La figure 4 représente différentes configurations de réception de trois bursts unitaires consécutifs au niveau de l'antenne du satellite 5.
- Le premier cas C11 représente la réception de trois bursts consécutifs dans le cas où l'on ne tient pas compte de l'incertitude de synchronisation.
- Le second cas C12 présente le cas extrême où le premier burst est en retard de la moitié de l'incertitude absolue de synchronisation, le second burst est en avance de la moitié de l'incertitude absolue de synchronisation et le troisième burst est en retard de la moitié de l'incertitude absolue de synchronisation.
- Le troisième cas C13 représente le cas extrême inverse où le premier burst est en avance de la moitié de l'incertitude absolue de synchronisation, le second burst est en retard de la moitié de l'incertitude absolue de synchronisation et le troisième burst est en avance de la moitié de l'incertitude absolue de synchronisation.

Dans le pire cas, en supposant que les bursts de chaque cas décrits sont reçus sur des fréquences différentes F1, F2, F3 et simultanément au niveau de l'antenne de réception du satellite, la durée maximale correspondant à la présence de temps de garde sur différentes fréquences est égale à deux fois la durée nominale d'un temps de garde augmentée d'une fois l'incertitude absolue de synchronisation.

Les trois diagrammes suivants de la figure 4 représentent différentes configurations de réception d'un superburst au niveau de l'antenne du satellite 5.
- Le premier cas C21, représente la réception d'un superburst dans le cas où l'on ne tient pas compte de l'incertitude de synchronisation.
- Le second cas C22 présente le cas extrême où le superburst est en retard de la moitié de l'incertitude absolue de synchronisation.
- Le troisième cas C23 est le cas extrême inverse où le superburst est en avance de la moitié de l'incertitude absolue de synchronisation.

En admettant que le superburst est reçu sur une fréquence F4 simultanément avec les bursts décrits précédemment dans les cas C11, C12 et C13 au niveau de l'antenne réceptrice du satellite, et afin que l'ensemble des emplacements du superburst susceptibles de correspondre à un temps de garde dans l'une quelconque des différentes configurations C21, C22 et C23, il faut prévoir une séquence d'apprentissage de longueur deux fois la longueur nominale d'un temps de garde augmentée de deux fois l'incertitude absolue de synchronisation.

Il est à noter que l'ensemble des combinaisons comprises entre la combinaison ne tenant pas compte des incertitudes de synchronisation et la combinaison représentant le pire cas des incertitudes de synchronisation sont prises en considération dans la présente invention pour permettre de définir la longueur et la position des séquences d'apprentissage à insérer.

Dans un mode de réalisation moins performant en terme de qualité de transmission, mais permettant de transmettre plus d'information utile dans la trame, on peut envisager d'insérer des séquences de remplissage plus courtes que le temps de garde correspondant dans un burst parallèle.

L'invention peut aussi être avantageusement appliquée lorsque les émetteurs sont des stations de base émettant chacune en parallèle des flots de bursts adjacents , nommés trames, sur des fréquences différentes. Ces bursts étant de même type que ceux décrits précédemment, il apparaît le même problème de superposition de temps de garde et de symboles d'information au niveau d'un récepteur commun, un satellite par exemple, problème qui peut être résolu de la façon décrite par l'invention.

On peut aussi envisager une application de l'invention dans le cas d'une boucle locale radio, en anglais « Wireless Local Loop ».

## Revendications

1. Système de transmission supportant une technique TDMA comprenant des émetteurs synchronisés avec un récepteur unique, chacun desdits émetteurs étant apte à transmettre audit récepteur des bursts de longueurs toutes multiples de celle d'un burst élémentaire, ledit burst élémentaire comprenant un temps de garde, ledit récepteur assurant la réception simultanée de bursts provenant d'émetteurs utilisant des fréquences porteuses différentes, dits bursts parallèles,
**caractérisé en ce que**,
chacun desdits émetteurs dispose d'un moyen pour insérer dans chaque burst à émettre, une séquence de remplissage à chaque emplacement dudit burst non occupé par un temps de garde et susceptible de correspondre à un emplacement occupé par un temps de garde dans un dédits bursts parallèles.

2. Système de transmission selon la revendication 1,
**caractérisé en ce que**
chacune desdites séquences de remplissage a une longueur supérieure ou égale à la longueur du temps de garde susceptible d'y correspondre dans un desdits bursts parallèles.

3. Système de transmission selon la revendication 2,
**caractérisé en ce que**
chacune desdites séquences de remplissage a une longueur égale à la longueur du temps de garde susceptible d'y correspondre dans un burst parallèle augmentée de deux fois l'incertitude absolue de synchronisation, ladite séquence étant centrée par rapport au milieu dudit emplacement.

4. Système de transmission selon l'une des revendications 1 à 3,
**caractérisé en ce que**
ladite séquence de remplissage est une séquence d'apprentissage.

5. Système de transmission selon l'une des revendications 1 à 4,
**caractérisé en ce que**
ledit récepteur est un élément constitutif de la charge utile d'un satellite assurant la fonction de relais entres lesdits émetteurs et une station de base et inversement.

6. Système de transmission selon l'une des revendications 1 à 4,
**caractérisé en ce que**
lesdits émetteurs et ledit récepteur forment une boucle locale radio.

7. Emetteur pour système de transmission supportant une technique TDMA ledit émetteur étant destiné à être synchronisé avec un récepteur et d'autres émetteurs, ledit émetteur étant apte à transmettre audit récepteur des bursts de longueurs toutes multiples de celle d'un burst élémentaire, ledit burst élémentaire comprenant un temps de garde, ledit récepteur étant destiné à assurer la réception simultanée d'un burst provenant dudit émetteur et de bursts provenant desdits autres émetteurs utilisant des fréquences porteuses différentes, dits burst parallèles,
**caractérisé en ce que**
ledit émetteur dispose d'un moyen pour insérer dans chaque burst à émettre, une séquence de remplissage à chaque emplacement dudit burst non occupé par un temps de garde et susceptible de correspondre à un emplacement occupé par un temps de garde dans un desdits bursts parallèles.

8. Emetteur pour système de transmission selon la revendication 7
**caractérisé en ce que**
chacune desdites séquences de remplissage insérée a une longueur supérieure ou égale à la longueur du temps de garde susceptible d'y correspondre dans un desdits bursts parallèles.

9. Emetteur pour système de transmission selon la revendication 8
**caractérisé en ce que**
chacune desdites séquences de remplissage insérée a une longueur égale à la longueur du temps de garde susceptible d'y correspondre dans un burst parallèle augmentée de deux fois l'incertitude absolue de synchronisation, ladite séquence étant centrée par rapport au milieu dudit emplacement.

10. Emetteur pour système de transmission selon l'une des revendications 7 à 9,
**caractérisé en ce que**
ladite séquence de remplissage est une séquence d'apprentissage.

## Patentansprüche

1. Übertragungssystem im Zeitmultiplex-Verfahren (TDMA), das aus synchronisierten Sendern mit einem einzigen Empfänger besteht, wobei jeder der genannten Sender Bursts mit beliebig mehrfacher Länge des elementaren Bursts an den genannten Empfänger übertragen kann, der genannte elementare Burst eine Schutzzeit enthält und der genannte Empfänger den gleichzeitigen Empfang von Bursts der verschiedenen Sender, so genannte Parallel-Bursts, auf verschiedenen Trägerfrequenzen gewährleistet,
**dadurch gekennzeichnet, dass**
jeder der genannten Sender über ein Mittel verfügt, das dazu dient, in jeden zu sendenden Burst an jeder Stelle, die nicht von einer Schutzzeit belegt ist und die so konzipiert ist, dass sie jeweils einer Stelle entspricht, die in einem der genannten Parallel-Bursts von einer Schutzzeit belegt wird, eine Füllsequenz einzufügen.

2. Übertragungssystem gemäß Anspruch 1,
**dadurch gekennzeichnet, dass**
die Länge jeder der genannten Füllsequenzen mindestens gleich groß ist wie die Länge der Schutzzeit, die ihr in einem der genannten Parallel-Bursts entspricht.

3. Übertragungssystem gemäß Anspruch 2,
**dadurch gekennzeichnet, dass**
die Länge jeder der genannten Füllsequenzen gleich groß ist wie die Länge der Schutzzeit, die ihr in einem der Parallel-Bursts entspricht, zuzüglich der doppelten absoluten Synchronisationsunsicherheit, und dass die genannte Sequenz im Verhältnis zur Mitte der genannten Stelle zentriert ist.

4. Übertragungssystem gemäß einem der Ansprüche 1 bis 3,
**dadurch gekennzeichnet, dass**
die genannte Füllsequenz eine Lernsequenz ist.

5. Übertragungssystem gemäß einem der Ansprüche 1 bis 4,
**dadurch gekennzeichnet, dass**
der genannte Empfänger ein Bestandteil der Fernmeldezuladung eines Satelliten ist und die Relaisfunktion zwischen den genannten Sendern und einer Basisstation in beide Richtungen gewährleistet.

6. Übertragungssystem gemäß einem der Ansprüche 1 bis 4,
**dadurch gekennzeichnet, dass**
die genannten Sender und der genannte Empfänger als drahtloser Teilnehmeranschluss (WLL) eingesetzt werden.

7. Sender für ein Übertragungssystem im Zeitmultiplex-Verfahren (TDMA), wobei der genannte Sender zur Synchronisation mit einem Empfänger und anderen Sendern ausgelegt ist, der genannte Sender Bursts mit beliebig mehrfacher Länge des elementaren Bursts an den genannten Empfänger übertragen kann, der genannte elementare Burst eine Schutzzeit enthält und der genannte Empfänger den gleichzeitigen Empfang eines Bursts des genannten Senders sowie weiterer Bursts der genannten anderen Sender, so genannte Parallel-Bursts, auf verschiedenen Trägerfrequenzen gewährleistet,
**dadurch gekennzeichnet, dass**
der genannte Sender über ein Mittel verfügt, das dazu dient, in jeden zu sendenden Burst an jeder Stelle, die nicht von einer Schutzzeit belegt ist und die so konzipiert ist, dass sie jeweils einer Stelle entspricht, die in einem der genannten Parallel-Bursts von einer Schutzzeit belegt wird, eine Füllsequenz einzufügen.

8. Sender für ein Übertragungssystem gemäß Anspruch 7,
**dadurch gekennzeichnet, dass**
die Länge jeder der genannten eingefügten Füllsequenzen mindestens gleich groß ist wie die Länge der Schutzzeit, die ihr in einem der genannten Parallel-Bursts entspricht.

9. Sender für ein Übertragungssystem gemäß Anspruch 8,
**dadurch gekennzeichnet, dass**
die Länge jeder der genannten eingefügten Füllsequenzen gleich groß ist wie die Länge der Schutzzeit, die ihr in einem der Parallel-Bursts entspricht, zuzüglich der doppelten absoluten Synchronisationsunsicherheit, und dass die genannte Sequenz im Verhältnis zur Mitte der genannten Stelle zentriert ist.

10. Sender für ein Übertragungssystem gemäß einem der Ansprüche 7 bis 9,
**dadurch gekennzeichnet, dass**
die genannte Füllsequenz eine Lernsequenz ist.

## Claims

1. Transmission system supporting a TDMA technique comprising synchronised transmitters with a single receiver, each of the said transmitters being capable of transmitting to the said receiver bursts of lengths which are all multiples of those of an elementary burst, the said elementary burst comprising a guard period, the said receiver ensuring the simultaneous reception of bursts coming from transmitters utilising different carrier frequencies, known as parallel bursts,
**characterised in that**
each of the said transmitters has a means of inserting in each burst to be transmitted a filler sequence at each position of the said burst that is not occupied by a guard period and able to correspond to a position occupied by a guard period in one of the said parallel bursts.

2. Transmission system according to Claim 1,
**characterised in that**
each of the said filler sequences has a length greater than or equal to the length of the guard period capable of corresponding to it in one of the same parallel bursts.

3. Transmission system according to Claim 2,
**characterised in that**
each of the said filler sequences has a length equal to the length of the guard period capable of corresponding to it in a parallel burst plus twice the absolute synchronisation uncertainty, the said sequence being centred in relation to the middle of the said position.

4. Transmission according to one of Claims 1 to 3,
**characterised in that**
the said filler sequence is a learning sequence.

5. Transmission system according to one of Claims 1 to 4,
**characterised in that**
the said receiver is a constituent element of the useful load of a satellite ensuring the relay function between the said transmitters and a base station and vice versa.

6. Transmission system according to one of Claims 1 to 4,
**characterised in that**
the said transmitters and the said receiver form a wireless local loop.

7. Transmitter for a transmission system supporting a TDMA technique, the said transmitter being intended to be synchronised with a receiver and other transmitters, the said transmitter being able to transmit to the said receiver bursts of lengths which are all multiples of that of an elementary burst, the said elementary burst comprising a guard period, the said receiver being intended to ensure the simultaneous reception of a burst coming from the said transmitter and bursts coming from the said other transmitters using different carrier frequencies, known as parallel bursts,
**characterised in that**
the said transmitter has a means of inserting in each burst to be transmitted a filler sequence at each position of the said burst that is not occupied by a guard period and able to correspond to a position occupied by a guard period in one of the said parallel bursts.

8. Transmitter for a transmission system according to Claim 7,
**characterised in that**
each of the said inserted filler sequences has a length greater than or equal to the length of the guard period capable of corresponding to it in one of the same parallel bursts.

9. Transmitter for a transmission system according to Claim 8,
**characterised in that**
each of the said inserted filler sequences has a length equal to the length of the guard period capable of corresponding to it in a parallel burst plus twice the absolute synchronisation uncertainty, the said sequence being centred in relation to the middle of the said position.

10. Transmitter for a transmission system according to one of Claims 7 to 9,
**characterised in that**
the said filler sequence is a learning sequence.
